# EUROPÄISCHE PATENTSCHRIFT

(11) **EP 0 669 242 B1**
(45) Veröffentlichungstag und Bekanntmachung des Hinweises auf die Patenterteilung: **27.12.1996**
(21) Anmeldenummer: 94102934.0
(22) Anmeldetag: 26.02.1994
(51) Int. Cl.: B61C 13/04, E01B 25/10, B23Q 7/14

(54) **Transfereinheit**
Transfer unit
Unité de transfert

(43) Veröffentlichungstag der Anmeldung: 30.08.1995
(73) Patentinhaber: Tückmantel, Rudi, Dipl.-Ing., D-42699 Solingen (DE)
(72) Erfinder: Tückmantel, Rudi, Dipl.-Ing., D-42699 Solingen (DE)
(74) Vertreter: Patentanwälte Dr. Solf & Zapf

(56) Entgegenhaltungen:
- EP-A- 0 367 972
- WO-A-91/17018
- GB-A- 1 529 060
- US-A- 4 640 196

## Beschreibung

Die vorliegende Erfindung betrifft eine Transfereinheit zum Aufbau von Transfersystemen, bestehend aus Schienenmodul und verfahrbaren Werkstückträger, wobei der Werkstückträger in dem Schienenmodul geführte Rollen aufweist, sowie von einer mit dem Werkstückträger verbundenen Antriebseinheit angetrieben ist, und der Schienenmodul zwei in Transportrichtung parallel verlaufende, einander gegenüberliegende Rollenbahnen besitzt.

Derartige Transfereinheiten sind bekannt und dienen zum Aufbau von Transfersystemen. Diese Transfersysteme werden zum innerbetrieblichen vollautomatischen Material- bzw. Werkstücktransport verwendet. Bekannte Transfereinheiten haben aufgrund ihrer konstruktiven Ausbildung und Anordnung der Rollen und der Rollenbahn den Nachteil, daß nur relativ große Kurvenradien möglich sind. Andere bekannte Transfereinheiten besitzen eine Schienenführung des Werkstückträgers, die zwar kleine Radien erlaubt, jedoch treten in den Schienenweichen nachteilige Kippmomente auf, da dort nur eine einseitige Führung des Werkstückträgers erfolgt.

Der vorliegenden Erfindung liegt die Aufgabe zugrunde, ausgehend von der eingangs beschriebenen Transfereinheit diese derart zu verbessern, daß ein beliebiger räumlicher Verlauf der Schienenmodule möglich ist, und zwar unter Einhaltung kleiner Kurvenradien, so daß eine hohe Präzision und große Variabilität erzielt wird, und gleichzeitig eine einfache und robuste Bauweise möglich ist.

Erfindungsgemäß wird dies durch die Merkmalkombination des Anspruchs 1 erreicht. Die vorliegende Erfindung basiert auf der Erkenntnis, daß durch die Verlegung der Antriebswelle zwischen die gegenüberliegenden Rollenbahnen und der Lagerung der Antriebseinheit auf der Welle die Drehachsen von Welle und Rolle zusammenfallen und parallel zur Rollenbahn verlaufen, wodurch im Zusammenspiel mit der Zwangsführung über Führungsprofile jeder beliebige räumliche Verlauf der Schienenbahn möglich ist.

Vorteilhafte Ausführungen der Erfindung sind in den Unteransprüchen enthalten. Anhand der in den beiliegenden Zeichnungen dargestellten Ausführungsbeispiele wird die Erfindung näher erläutert. Es zeigen:
- Fig. 1: einen Querschnitt durch eine erfindungsgemäße Transfereinheit,
- Fig. 2: einen Querschnitt durch eine weitere erfindungsgemäße Transfereinheit,
- Fig. 3: einen Längsschnitt durch eine erfindungsgemäße Transfereinheit gemäß Fig. 2 ohne Schienenmodul,
- Fig. 4: einen Längsschnitt durch eine weitere Ausführung einer erfindungsgemäßen Transfereinheit,
- Fig. 5: einen Schnitt entlang der Schnittlinie V-V in Fig. 4,
- Fig. 6: einen Schnitt entlang der Schnittlinie VI-VI in Fig. 4,

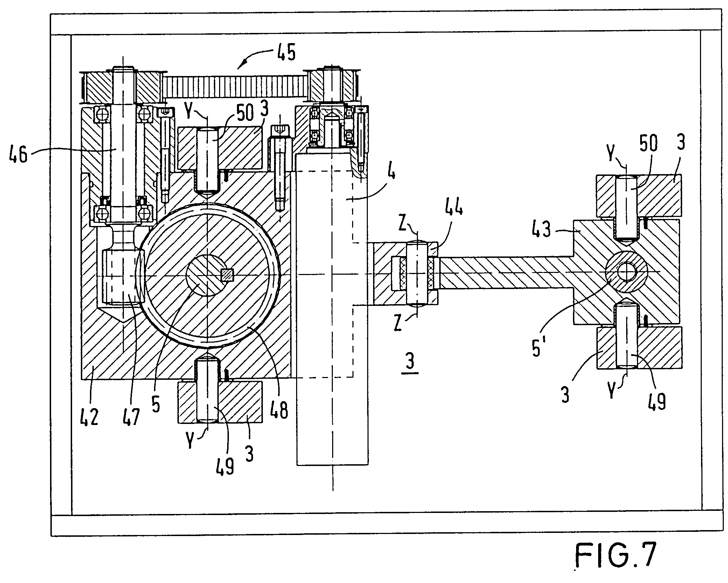

- Fig. 7: einen Schnitt gemäß der Schnittlinie VII-VII in Fig. 4,

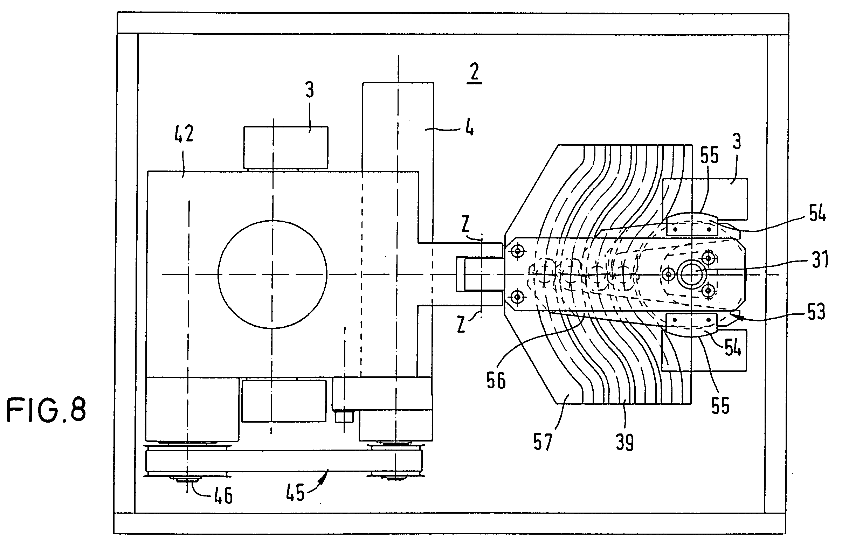

- Fig. 8: eine Unteransicht gemäß dem Pfeil VIII in Fig. 4
- Fig. 9: eine Ansicht eines Streckenverlaufs aus erfindungsgemäßen Schienenmodulen.

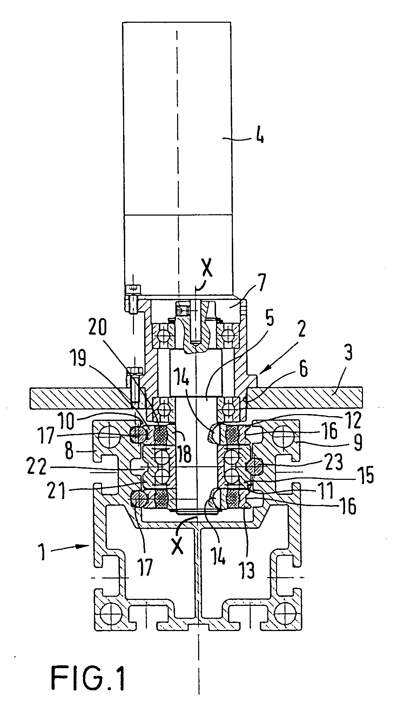

Wie sich aus Fig. 1 ergibt, besteht eine erfindungsgemäße Transfereinheit aus einem Schienenmodul 1 und einem selbstfahrenden Werkstückträger 2. Der Werkstückträger 2 weist eine Trägerplatte 3 auf, auf der ein Antriebsmotor 4 befestigt ist. Der Antriebsmotor 4 ist mit einer Welle 5 verbunden, die durch die Trägerplatte 3 verläuft und in einer Durchtrittsöffnung 6 der Trägerplatte 5 gelagert ist. Die Welle 5 kann zweckmäßigerweise über ein Zwischengetriebe 7 mit dem Antriebsmotor 4 verbunden sein. Die Welle 5 ragt mit ihrem freien Wellenende in den Schienenmodul 1 hinein. Der Schienenmodul 1 weist im Querschnitt gesehen ein U-förmiges Querschnittsprofil auf. Hierbei bilden die beiden gegenüberliegenden freien U-Schenkel 8, 9 an ihren Innenseiten Rollenbahnen 10, 11. Diese Rollenbahnen 10, 11 verlaufen parallel zueinander in Längsrichtung des Schienenmoduls 1. Die Welle 5 ist mittig zwischen den Rollenbahnen 10, 11 angeordnet. Hierbei verläuft die Drehachse X-X der Welle 5 parallel zu den Rollenbahnen 10, 11. Im Bereich der Welle 5 zwischen den Rollenbahnen 10, 11 sind auf dieser zwei beabstandet voneinander angeordnete Führungsrollen 12, 13 im dargestellten Ausführungsbeispiel drehfest vorzugsweise über eine Keilverbindung 14 mit der Welle 5 verbunden. Die Führungsrollen 12, 13 übertragen die Antriebskraft. Zwischen den beiden Führungsrollen 12, 13 ist ein frei drehbares Gegenlager 15 auf der Welle 5 gelagert. Dieses Gegenlager 15 ist im dargestellten Ausführungsbeispiel als Wälzlager ausgebildet. Anstelle eines Wälzlagers kann aber auch als Gegenlager 15 eine frei drehbar gelagerte Rolle gewählt werden. Die Führungsrollen 12, 13 haben an ihrem Umfang ein Rillenprofil 16, das vorzugsweise als Prismenprofil ausgebildet ist. In der Rollenbahn 10 ist den Rillenprofilen 16 der Führungsrollen 12, 13 gegenüberliegend jeweils ein Führungsprofil 17 angeordnet, das in der Rollenbahn 10 mittels Pressitz gehalten ist. Dieses Führungsprofil 17 ist im dargestellten Ausführungsbeispiel als Runddrahtprofil ausgebildet und ragt mit einem Profilsegment über die Rollenbahn 10 hinaus und wird in diesem Bereich von dem Rillenprofil 16 formschlüssig umfaßt. Anstelle des Runddrahtprofils kann auch ein geeignetes Prismenprofil gewählt werden. Die Führungsrollen 12, 13 bestehen zweckmäßigerweise aus einem inneren Ring 18 und einem äußeren Profilring 19, die über ein radialelastisches Zwischenstück 20 miteinander verbunden sind. Das als Wälzlager ausgebildete Gegenlager 15 besitzt in seinem äußeren Lagerring 21 ebenfalls ein Rillenprofil 22. Diesem Rillenprofil 22 gegenüber ist in der der Rollenbahn 10 gegenüberliegenden Rollenbahn 11 ein Stützprofil 23 vorzugsweise eingepreßt, das vorzugsweise ebenfalls als Runddraht ausgebildet ist und mit einem Drahtsegment aus der Rollenbahn 11 herausragt. Dieses Drahtsegment des Stützprofils 23 wird von dem Rillenprofil 22 formschlüssig umfaßt. Der Durchmesser der Führungsrollen 12, 13 und des äußeren Lagerrings 21 des Gegenlagers 15 sind derart bemessen, daß im eingesetzten Zustand zwischen den Rollenbahnen 10, 11 die Führungsrollen 12, 13 kraftschlüssig an den Führungsprofilen 17 anliegen. Durch diese Ausgestaltung mit zwei Führungsrollen 12, 13 und dem zwischen diesen angeordneten mittigen Gegenlager 15 ergibt sich eine drehmomentfreie Dreipunkt-Abstützung, wobei durch die Ausbildung der Führungsprofile 17 und des Stützprofils 23 als Runddraht zwischen den Führungsrollen 12, 13 und dem Führungsprofil 17 sowie dem Gegenlager 15 und dem Stützprofil 23 jeweils eine linienförmige Berührung gegeben ist. Durch das elastische Zwischenstück 20 innerhalb der Führungsrollen 12, 13 wird eine eventuell bestehende Maßtoleranz ausgeglichen, und es kann ein gewisser Druck im jeweiligen Anlagebereich der Führungsrollen 12, 13 bzw. des Lagerrings 21 erzeugt werden.

Es liegt ebenfalls im Rahmen der Erfindung, wenn lediglich eine Führungsrolle 12 auf der Welle 5 drehfest angeordnet ist. Der Schienenmodul 1 ist vorzugsweise als stranggepreßtes Aluminium-Profil ausgebildet. Es kann auch Kunststoff als Herstellungsmaterial dienen. Hierbei ist das Aluminium-Profil bzw. das Kunststoff-Profil derart ausgestaltet, daß sich eine hinreichende Formstabilität ergibt.

Der Antriebsmotor 4 ist vorzugsweise ein regelbarer Gleichstrommotor und als Energiequelle zum Antrieb dieses Antriebsmotors 4 kann beispielsweise ein auf der Trägerplatte 3 befestigter Akkumulator dienen.

Die erfindungsgemäße Transfereinheit ist somit selbstfahrend und in der Lage eigenständig zu lenken und zum Durchführen eines Individualverkehrs geeignet, wobei der Schienenmodul 1 die reine Fahrbahn bildet. Hierbei kann jede Transfereinheit eine eigene Steuerung aufweisen.

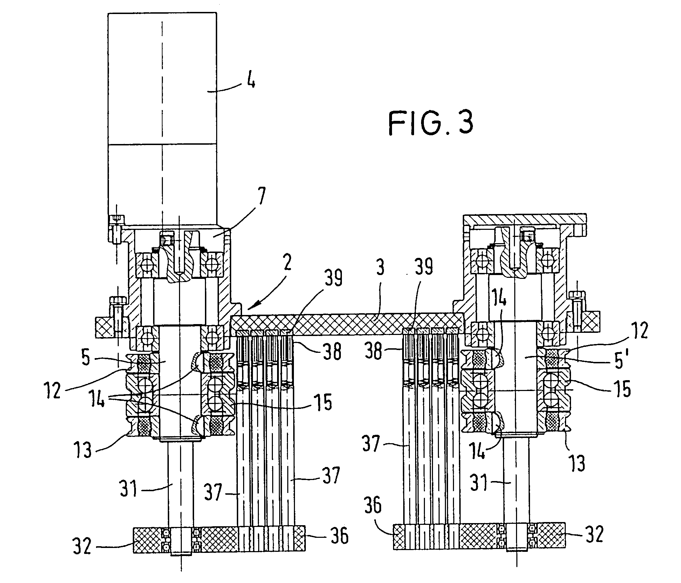

Eine erfindungsgemäße Transfereinheit besitzt zwei hintereinanderliegende Wellen 5, 5' die in Führungsrollen 12, 13 und Gegenlager 15 gelagert sind, wie dies beispielsweise aus Fig. 3 ersichtlich ist, wobei die Wellen 5, 5' in Lagerkörpern der Trägerplatte 3 gelagert sind. Die Welle 5' ist hierbei nicht angetrieben.

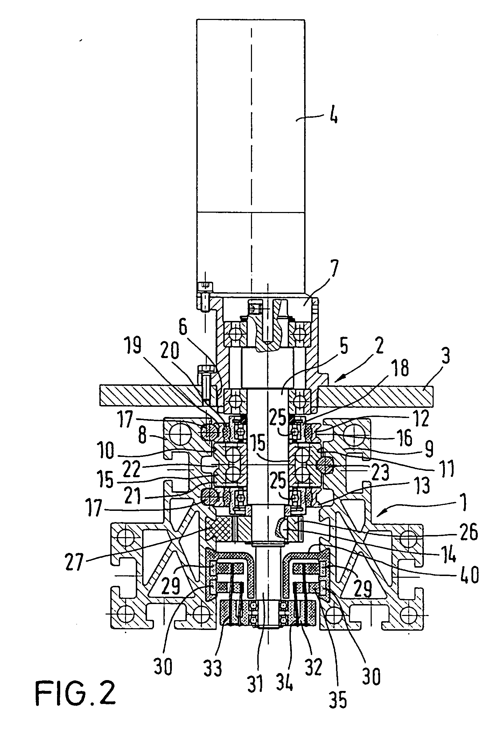

In den Fig. 2 und 3 ist eine weitere Ausführungsform einer erfindungsgemäßen Transfereinheit dargestellt, wobei gleiche Teile wie in Fig. 1 mit denselben Bezugsziffern versehen sind.

Im Unterschied zur Ausführungsform gemäß Fig. 1 sind bei der Ausführungsform gemäß Fig. 2 die beiden Führungsrollen 12, 13 frei drehbar über ein Zwischenlager 25 jeweils auf der Welle 5 gelagert, so daß über die Führungsrollen 12, 13 nicht die Antriebskraft übertragen wird. Vielmehr dient zur Fortbewegung der Transfereinheit in dem Schienenmodul 1 ein Zahnradantrieb, bestehend aus einem Zahnradritzel 26, das auf der Welle 5 gelagert ist, und einer in der Rollenbahn 10 befestigten Zahnstange 27, die in Längsrichtung des Schienenmoduls 1 verläuft. Weiterhin ist im Unterschied zu der Ausführungsform gemäß Fig. 1 hier eine Stromversorgung des Antriebsmotors 4 über ein in dem Schienenmodul 1 verlegtes Stromschienensystem vorgesehen. Hierzu sind Stromleiterbahnen 29, 30 innerhalb des Schienenmoduls 1 in einem Bereich unterhalb der Rollenbahnen 10, 11 angeordnet, die vorzugsweise aus Kupfer bestehen. Auf dem dem Antriebsmotor 4 gegenüberliegenden Ende der Welle 5 ist auf einem Wellenansatz 31 eine Leiterbahnplatine 32 frei drehbar gelagert. Auf der Leiterbahnplatine 32 sind stiftartige Stromabnehmer 33, 34 befestigt, die endseitige Schleifkontakte 35 besitzen, die an den Stromleiterbahnen 29, 30 anliegen. Wie insbesondere aus Fig. 3 ersichtlich ist, weist die Leiterbahnplatine 32 einen zwischen den Rollenbahnen 10, 11 liegenden Platinenfortsatz 36 auf, auf dem stiftförmige Stromabnehmer 37 senkrecht zur Platine befestigt sind. Diese stiftförmigen Stromabnehmer 37 weisen Schleifkontakte 38 auf, die mit Stromleiterbahnen 39 an der Unterseite der Trägerplatte 3 in Verbindung stehen. Die Leiterbahnen 39 sind über Verbindungsleitungen mit dem Antriebsmotor 4 verbunden. Dieses System aus Leiterbahnen 29, 30, 39 und Stromabnehmern 33, 34, 37 dient jedoch nicht nur zur Übertragung der elektrischen Energie zur Versorgung des Antriebsmotors 4, sondern kann gleichzeitig auch zur Übertragung elektrischer Signale zur Steuerung der erfindungsgemäßen Transfereinheit verwendet werden. Die Stromabnehmer 33, 34 bzw. 37 können ganz oder teilweise als vorgespannte Federn aus Kupfer ausgebildet sein. Zweckmäßigerweise werden die Stromabnehmer 33, 34 innerhalb eines aus Kunststoff bestehenden Kanals 40 geführt, so daß sie gegen Verschmutzung und Berührungskontakt geschützt sind.

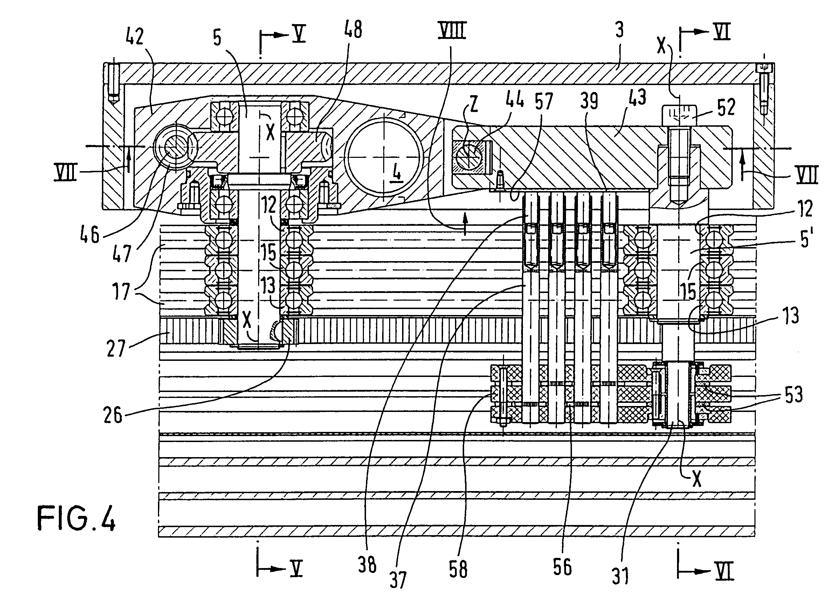

In Fig. 4 ist eine weitere Ausführungsform einer erfindungsgemäßen Transfereinheit dargestellt. Hierbei sind in dieser Fig. 4 und in den folgenden Figuren gleiche Teile wie in den Fig. 1 und 3 mit denselben Bezugsziffern versehen.

Die Trägerplatte 3, die die zwei hintereinanderliegenden Wellen 5, 5' verbindet, ist gegenüber der Ausführung in den Fig. 1 und 3 modifiziert, was ebenfalls für die Anordnung der Antriebseinheit 4 und die Ausbildung des Stromabnehmersystems gilt.

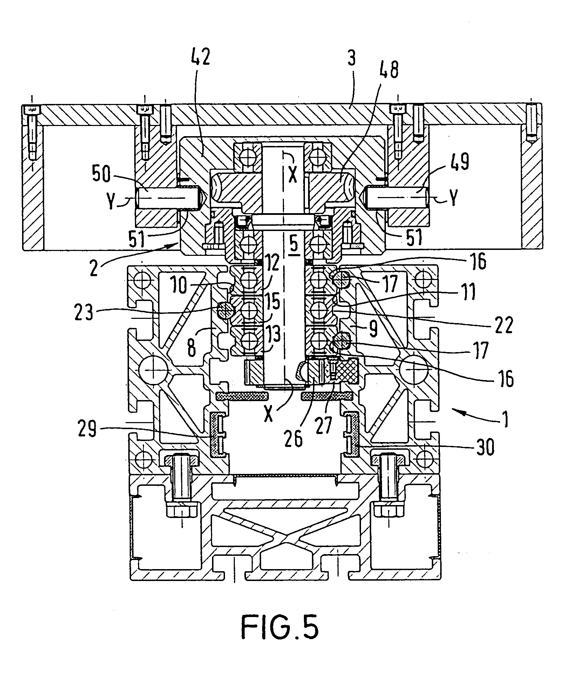

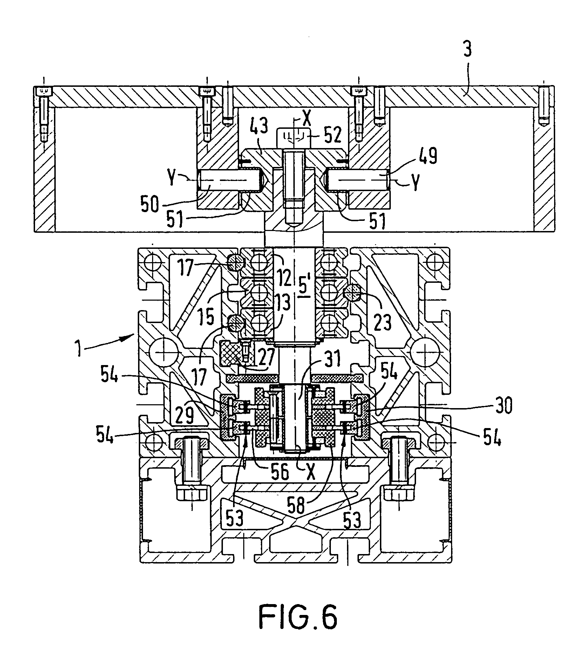

Im dargestellten Ausführungsbeispiel ist die Trägerplatte 3 derart gelagert, daß die Transfereinheit auch Bögen durchfahren kann, die zwei übereinanderliegende Ebenen miteinander verbinden. Hierzu ist die Trägerplatte 3 mit den Lagerkörpern 42, 43 der Wellen 5, 5' nicht starr wie in den Fig. 1 bis 3 dargestellt, sondern schwenkbeweglich um eine zur Achse X-X senkrechte Achse Y-Y gelagert, siehe Fig. 5 und 6. Gleichzeitig sind vorteilhafterweise die Lagerkörper 42, 43 miteinander ebenfalls über ein Gelenk 44 miteinander schwenkbeweglich verbunden. Die Schwenkachse Z des Gelenks 44 verläuft parallel zur Schwenkachse Y-Y. Innerhalb des Lagerkörpers 42 ist, wie in Fig. 5 dargestellt, der Antriebsmotor 4 liegend, d.h. parallel zur Trägerplatte 3 unterhalb derselben angeordnet. Der Antriebsmotor 4 kann insbesondere über einen Zahnriemenantrieb 45 mit einer parallel zum Antriebsmotor 4 verlaufenden, diesem gegenüberliegend angeordneten Antriebswelle 46 verbunden werden, die ebenfalls im Lagerkörper 42 drehbar gelagert ist und mit einem an ihr ausgebildeten Antriebsritzel 47 wird ein auf der Welle 5 befestigtes Zahnrad 48 angetrieben. Wie insbesondere die Fig. 5 und 6 zeigen, wird die schwenkbewegliche Lagerung der Trägerplatte 3 an den Lagerkörper 42, 43 durch zwei jeweils einander gegenüberliegende, an der Trägerplatte 3 befestigte Lagerbolzen 49, 50 erreicht, die in Lagerbuchsen 51 der Lagerkörper 42, 43 geführt sind. Im dargestellten Ausführungsbeispiel ist am freien Ende der Welle 5 ein Zahnradritzel 26 befestigt, das mit einer in der Rollenbahn 10 angeordneten Zahnstange im Eingriff steht. Alternativ zu diesem Zahnrad- bzw. Zahnstangenantrieb kann auch ein Reibradantrieb vorgesehen sein. In beiden Fällen sind die Führungsrollen 12, 13 frei drehbar, wie auch das Gegenlager 15, gelagert. Hierbei können diese Bauteile als bekannte Kugellager ausgebildet sein. Eine entsprechende Anordnung befindet sich auch auf der Welle 5', die jedoch nicht angetrieben ist, so daß auch das Ritzel 26 entfällt. Der Lagerkörper 43 ist auf der Welle 5' über eine Schraubverbindung 52 befestigt, wobei die Welle 5' feststeht, d.h. sich nicht dreht. Vorzugsweise ist an der Welle 5' und dem Lagerkörper 43 die Stromabnehmereinrichtung angeordnet, mit der der Antriebsstrom und die Steuersignale auf die Antriebseinheit, die am Lagerkörper 42 ausgebildet ist, von dem in dem Schienenmodul 1 verlaufenden Stromschienensystem aus den Stromleiterbahnen 29, 30 auf die Antriebseinheit übertragen werden. Auf dem freien Ende der Welle 5' sind in der Ebene der Strombahnen Stromabnehmer 53 übereinander angeordnet. Die Zahl der Stromabnehmer 53 richtet sich nach der Anzahl der übereinanderliegenden abzutastenden Strombahnen. Diese Stromabnehmer 53 sind auf der Welle 5' um deren Achse X-X drehbar gelagert und weisen jeweils ein Kontaktsegment 54 auf, dessen äußere Kontaktfläche 55 kreisbogenförmig ist und auf einem Kreis liegt, dessen Mittelpunkt in der Achse X-X liegt und dessen Durchmesser dem Abstand der gegenüberliegenden Strombahnen 29 bzw. 30 entspricht. Diese Kontaktsegmente 54 sind jeweils an einem auf der Welle 5' gelagerten Arm 56 befestigt. Die einzelnen Kontaktsegmente 54 sind mit ihren Armen 56 übereinander angeordnet und jeweils gegeneinander elektrisch getrennt. Hierbei können diametral einandergegenüberliegende Kontaktsegmente 54 auch in derselben Ebene liegen. Die Arme 56 verlaufen im Zwischenraum zwischen den Stromleiterbahnen, und zwar in Richtung auf die Welle 5. An ihren freien Enden tragen die Arme 56 die stiftförmigen Stromabnehmer 37 senkrecht zur Trägerplatte 3 ausgerichtet. Diese Stromabnehmer 37 besitzen die Schleifkontakte 38, die mit den Stromleiterbahnen 39 an einer Platine 57 an der Unterseite des Lagerkörpers 43 in federndem Berührungskontakt stehen. Die Leiterbahnen 39 besitzen einen etwa bogenförmigen Verlauf, der sich aus der Bewegungsbahn der Stromabnehmer 37 bei einer Kurvenfahrt des erfindungsgemäßen Werkstückträgers 2 ergibt. Die Arme 56 sind derart geformt, daß die Stromabnehmer 37 alle hintereinander auf einer Geraden durch die Drehachse X-X liegen. Zweckmäßigerweise sind die Arme 56 innerhalb eines aus elektrisch isolierendem Material bestehenden, lagenweise aufgebauten Isolierkörper 58 zusammengefaßt.

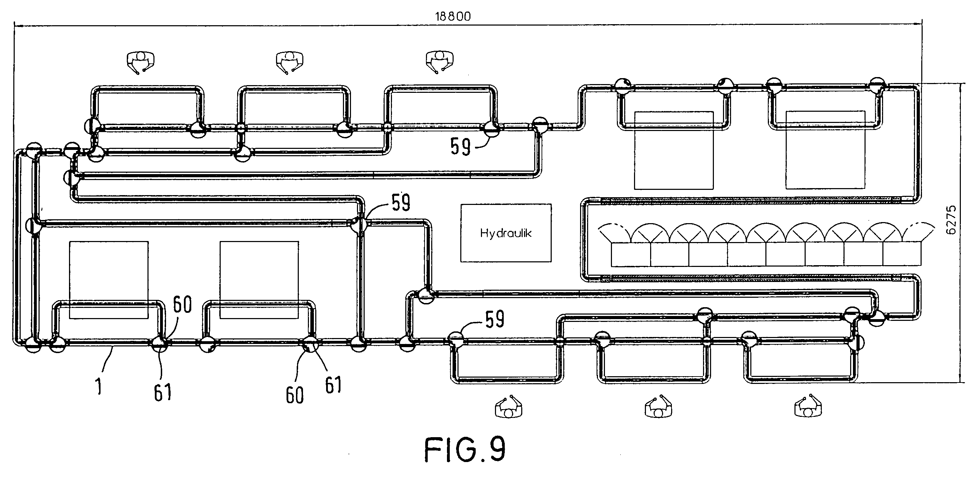

In Fig. 9 ist ein aus einzelnen erfindungsgemäßen Schienenmodulen erstellte Streckenverlauf dargestellt. Wie sich hieraus ergibt, ermöglicht die vorhergehende Erfindung einen nahezu beliebigen Verlauf mit engen Kurvenradien. Abzweigungen werden vorteilhafterweise durch als Drehscheiben 59 ausgebildete Module hergestellt. Auf eine derartige Drehscheibe 59 ist insbesondere ein 90°-Schienenbogen 60 und eine gerade Schienenstrecke 61 angeordnet, die wahlweise durch Drehung der Drehscheibe 59 zur Verbindung benutzt werden können.

Es liegt im Rahmen der Erfindung die Lagerung und Ausbildung der Führungsrollen 12, 13 bei den gezeigten Ausführungsbeispielen auszutauschen. Dies gilt ebenfalls für die unterschiedlichen Antriebsarten. In den gezeigten Ausführungsbeispielen sind jeweils pro Welle 5, 5' zwei Führungsrollen 12, 13 und ein dazwischenliegendes Gegenlager 15 dargestellt. Erfindungsgemäß ist es ebenfalls möglich, nur eine Führungsrolle vorzusehen, die mit der Welle 5 antriebsmäßig verbunden ist sowie auf der Welle 5' frei drehbar gelagert ist. Bei dieser Ausführungsform ist jeweils nur ein Gegenlager pro Welle 5, 5' vorhanden. Hierbei kann aber auch eine Ausführung vorgesehen werden, wobei auch die auf der Welle 5 gelagerte Führungsrolle frei drehbar ist, da der Antrieb beispielsweise über einen Zahnstangenantrieb oder einen Reibradantrieb erfolgt. Der erfindungsgemäße Schienenmodul 1 kann jede beliebige Krümmung besitzen, so daß Kurven mit nahezu beliebigem Kurvenradius verwirklicht werden können. Auch kann mittels der erfindungsgemäßen Transfereinheit eine hängende Fahrweise des Werkstückträgers 2 verwirklicht werden, wie auch eine schräge und auch eine senkrechte Anordnung des Schienenmoduls 1 möglich sind. Auch kann eine gewendelte Ausbildung des Schienenmoduls 1 realisiert werden. Weiterhin ist es erfindungsgemäß möglich, einen Schleppantrieb für den Werkstückträger 2 bzw. die Transfereinheit vorzusehen.

Weiterhin ist es erfindungsgemäß möglich, wenn das Führungsprofil für die Führungsrollen und das Stützprofil für das frei drehbare Gegenlager aus einer Profilnut besteht, welche mit Laufschienen versehen ist. Für leichte Ausführungen ist auch eine Lösung ohne Laufschienen möglich, so daß die Führungsrollen direkt auf dem Schienenmodul laufen.

## Patentansprüche

1. Transfereinheit zum Aufbau von Transfersystemen, bestehend aus Schienenmodul (1) und verfahrbarem Werkstückträger (2), wobei der Werkstückträger (2) mindestens eine in dem Schienenmodul (1) geführte Führungsrolle (12,13) aufweist, sowie von einer Antriebseinheit (4) angetrieben ist, und der Schienenmodul (1) zwei in Transportrichtung parallel verlaufende, einander gegenüberliegende Rollenbahnen (10,11) aufweist,
**dadurch gekennzeichnet**,
daß auf einer zwischen den Rollenbahnen (10,11) verlaufenden Welle (5) des Werkstückträgers (2), deren Drehachse X-X in einer Ebene verläuft, die parallel zu den Rollenbahnen (10,11) ist, die bzw. jede Führungsrolle (12, 13) angeordnet ist, deren Drehachse mit der Drehachse X-X der Welle (5) zusammenfällt, und die bzw. jede Führungsrolle (12, 13) mit ihrer Lauffläche auf einem in einer Rollenbahn angeordneten Führungsprofil (17) abrollt und in der dem Führungsprofil (17) gegenüberliegenden Rollenbahn (11) ein Stützprofil (23) angeordnet ist, an dem sich die Welle (5) über ein frei drehbares Gegenlager (15) abstützt.

2. Transfereinheit nach Anspruch 1,
**dadurch gekennzeichnet**, daß das Führungsprofil (17) und das Stützprofil (23) aus jeweils einem Runddraht oder Prismenprofil besteht, der vorzugsweise mit Pressitz in den Rollenbahnen (10, 11) angeordnet ist und mit einem Drahtsegment von den Rollenbahnen (10, 11) vorsteht.

3. Transfereinheit nach Anspruch 1 oder 2,
**dadurch gekennzeichnet**, daß die Führungsrollen (12, 13) an ihrem Umfang ein Rillenprofil (16) aufweisen, das der Außenkontur des Führungsprofils (17) derart angepaßt ist, daß das Rillenprofil (16) das Führungsprofil (17) teilweise formschlüssig umfaßt und vorzugsweise kraftschlüssig gegen dieses anliegt.

4. Transfereinheit nach einem der Ansprüche 1 bis 3,
**dadurch gekennzeichnet**, daß das Gegenlager (15) aus einem Wälzlager oder einer Rolle besteht, und der äußere Lagerring (21) oder die Rolle ein Umfangs-Rillenprofil (22) aufweist, das der Außenkontur des Stützprofils (23) derart angepaßt ist, daß das Umfangs-Rillenprofil (22) das Stützprofil (23) teilweise formschlüssig umfaßt.

5. Transfereinheit nach einem der Ansprüche 1 bis 4,
**dadurch gekennzeichnet**, daß zwei Führungsrollen (12, 13) hintereinander auf der Welle (5) sowie zwei diesen zugeordnete Führungsprofile (17) in derselben Rollenbahn (10) angeordnet sind, wobei zwischen den beiden Führungsrollen (12, 13) das Gegenlager (15) vorzugsweise mittig angeordnet ist.

6. Transfereinheit nach einem der Ansprüche 1 bis 5,
**dadurch gekennzeichnet**, daß die Führungsrollen (12, 13) aus einem inneren Ring (18) und einem äußeren Ring (19) bestehen, die über ein radialelastisches Zwischenstück (20) verbunden sind.

7. Transfereinheit nach einem der Ansprüche 1 bis 6,
**dadurch gekennzeichnet,** daß das Umfangs-Rillenprofil (16) der Führungsrollen (12, 13) und das Rillenprofil (22) des Gegenlagers (15) als Formprofile, insbesondere Prismenprofile ausgebildet sind.

8. Transfereinheit nach einem der Ansprüche 1 bis 7,
**dadurch gekennzeichnet,** daß mindestens eine der Führungsrollen (12, 13) formschlüssig, insbesondere über eine Keilvorbindung mit der Welle (5) verbunden ist.

9. Transfereinheit nach einem der Ansprüche 1 bis 7,
**dadurch gekennzeichnet,** daß auf der Welle (5) ein Zahnradritzel (26) befestigt ist, das mit einer in dem Schienenmodul (1) in Längsrichtung verlaufenden Zahnstange (27) kämmt, und die Führungsrollen (12, 13) auf der Welle (5) frei drehbar gelagert sind oder ein Reibantrieb vorgesehen ist.

10. Transfereinheit nach einem der Ansprüche 1 bis 9,
**dadurch gekennzeichnet,** daß zwei hintereinanderliegende Wellen (5, 5') vorgesehen sind, die in Führungsrollen (12, 13) und einem Gegenlager (15) gelagert sind, wobei die Wellen (5, 5') in Lagerkörpern der Trägerplatte (3) geführt sind und die Welle (5') nicht angetrieben ist.

11. Transfereinheit nach einem der Ansprüche 1 bis 10,
**dadurch gekennzeichnet,** daß unterhalb mindestens einer Rollenbahn (10, 11) des Schienenmoduls (1) Stromleiterbahnen (29, 30) in Schienenlängsrichtung verlaufen.

12. Transfereinheit nach einem der Ansprüche 1 bis 11,
**dadurch gekennzeichnet**,
daß die Antriebseinheit (4) mit dem Werkstückträger verbunden ist und die Welle (5) antreibt.

13. Transfereinheit nach Anspruch 12,
**dadurch gekennzeichnet**,
daß auf der dem Antriebsmotor (4) gegenüberliegenden Seite die Welle (5) einen Wellenansatz (31) aufweist, auf dem endseitig eine Leiterbahnplatine (32) frei gelagert ist, an der Stromabnehmer (33,34) befestigt sind, die über Schleifkontakte (35) mit den Leiterbahnen (29,30) in dem Schienenmodul (1) in elektrisch leitender Verbindung stehen.

14. Transfereinheit nach einem der Ansprüche 11 bis 13,
**dadurch gekennzeichnet**,
daß an einem zwischen den Rollenbahnen (10,11) des Schienenmoduls (1) liegenden Platinenfortsatz (36) stiftförmige Stromabnehmer (37) senkrecht zur Platine (32) befestigt sind, die über endseitige Schleifkontakte (38) mit in der Trägerplatte (3) angeordneten Leiterbahnen (39) in elektrisch leitendem Kontakt stehen.

15. Transfereinheit nach einem der Ansprüche 1 bis 14,
**dadurch gekennzeichnet**,
daß die Trägerplatte (3) mit den Lagerkörpern (42,43) der Wellen (5,5') schwenkbeweglich um eine zur Achse X-X der Wellen (5,5') senkrechte Achse Y-Y gelagert ist.

16. Transfereinheit nach einem der Ansprüche 1 bis 15,
**dadurch gekennzeichnet**,
daß die Lagerkörper (42,43) miteinander ebenfalls über ein Gelenk (44) schwenkbeweglich verbunden sind, dessen Schwenkachse Z parallel zur Schwenkachse Y-Y verläuft.

17. Transfereinheit nach einem der Ansprüche 1 bis 16,
**dadurch gekennzeichnet,** daß der Antriebsmotor (4) liegend, d.h. parallel zur Trägerplatte (3) unterhalb derselben angeordnet ist und vorzugsweise über einen Zahnriemenantrieb mit einer parallel zum Antriebsmotor (4) verlaufenden, diesem gegenüberliegend angeordneten Antriebswelle (46) verbunden ist, die ebenfalls im Lagerkörper (42) drehbar gelagert ist und mit einem an ihr ausgebildeten Antriebsritzel (47) mit einem auf der Welle (5) befestigten Zahnrad (48) kämmt.

18. Transfereinheit nach einem der Ansprüche 1 bis 17,
**dadurch gekennzeichnet,** daß die schwenkbewegliche Lagerung der Trägerplatte (3) an den Lagerkörpern (42, 43) durch zwei jeweils einander gegenüberliegende, an der Trägerplatte (3) befestigte Lagerbolzen (49, 50) erreicht wird, die in Lagerbuchsen (51) der Lagerkörper (42, 43) geführt sind.

19. Transfereinheit nach einem der Ansprüche 1 bis 18,
**dadurch gekennzeichnet,** daß die nicht angetriebene Welle (5') über eine Schraubverbindung (52) mit dem Lagerkörper (43) verbunden ist.

20. Transfereinheit nach einem der Ansprüche 1 bis 19,
**dadurch gekennzeichnet,** daß auf dem freien Ende der Welle (5') in der Ebene der Strombahnen Stromabnehmer (53) übereinander angeordnet sind, wobei vorzugsweise die Zahl der Stromabnehmer (53) sich nach der Anzahl der übereinanderliegenden abzutastenden Strombahnen richtet und die Stromabnehmer (53) auf der Welle (5') um deren Achse X-X drehbar gelagert sind und jeweils ein Kontaktsegment (54) aufweisen, dessen äußere Kontaktfläche (55) kreisbogenförmig ist und auf einem Kreis liegt, dessen Mittelpunkt in der Achse X-X liegt und dessen Durchmesser dem Abstand der gegenüberliegenden Strombahnen (29 bzw. 30) entspricht.

21. Transfereinheit nach einem der Ansprüche 1 bis 20,
**dadurch gekennzeichnet,** daß die Kontaktsegmente (54) jeweils an einem auf der Welle (5) gelagerten Arm (55) befestigt sind und insbesondere mit ihren Armen (55) übereinander angeordnet und jeweils gegeneinander elektrisch getrennt sind, wobei die Arme (55) im Zwischenraum zwischen den Stromleiterbahnen und in Richtung auf die Welle (5) verlaufen.

22. Transfereinheit nach einem der Ansprüche 1 bis 21,
**dadurch gekennzeichnet,** daß die Arme (55) die stiftförmigen Stromabnehmer (37) senkrecht zur Trägerplatte (3) aufweisen und die Schleifkontakte besitzen, die mit den Stromleiterbahnen (39) an einer Platine (57) an der Unterseite des Lagerkörpers (43) im federnden Berührungskontakt stehen.

23. Transfereinheit nach einem der Ansprüche 1 bis 22,
**dadurch gekennzeichnet,** daß die Arme (55) derart geformt sind, daß die Stromabnehmer (37) alle hintereinander auf einer Geraden durch die Drehachse X-X liegen.

24. Transfereinheit nach einem der Ansprüche 1 bis 23,
**dadurch gekennzeichnet,** daß der Schienenmodul (1) aus einem Aluminium- oder Kunststoffprofil besteht.

25. Transfereinheit nach einem der Ansprüche 1 bis 24,
**dadurch gekennzeichnet,** daß der Antriebsmotor (4) über ein Zwischengetriebe (7) mit der Welle (5) verbunden ist.

26. Transfereinheit nach einem der Ansprüche 1 bis 25,
**dadurch gekennzeichnet,** daß der Antriebsmotor (4) ein regelbarer Gleichstrommotor ist.

## Claims

1. A transfer unit for the construction of transfer systems, comprising a rail module (1) and a movable workpiece carrier (2), the workpiece carrier (2) having at least one guide roller (12, 13) guided in the rail module (1) and being driven by a drive unit (4), and the rail module (1) having two mutually opposing roller tracks (10, 11) which run parallel in the direction of transport, characterized in that the or each guide roller (12, 13) is arranged on a shaft (5) of the workpiece carrier (2), said shaft (5) running between the roller tracks (10, 11) and having its axis of rotation X-X in a plane parallel to the roller tracks (10, 11), the axis of rotation of the or each guide roller (12, 13) coinciding with the axis of rotation X-X of the shaft (5), and the running surface of the or each guide roller (12, 13) rolls on a profiled guide section (17) which is arranged in a roller track and there is arranged in the roller track (11) opposite the profiled guide section (17) a profiled supporting section (23) on which the shaft (5) is supported by way of a freely rotatable counter-bearing (15).

2. A transfer unit according to Claim 1, characterized in that the profiled guide section (17) and the profiled supporting section (23) each comprise a circular wire or V-shaped profiled section which is preferably arranged with press fit in the roller tracks (10, 11) and projects from the roller tracks (10, 11) by a wire segment.

3. A transfer unit according to Claim 1 or 2, characterized in that the guide rollers (12, 13) have on their periphery a grooved profiled section (16) which is matched to the external contour of the profiled guide section (17) such that the grooved profiled section (16) partially encloses the profiled guide section (17) with form fit and preferably bears with force fit against the latter.

4. A transfer unit according to Claims 1 to 3, characterized in that the counter-bearing (15) comprises a roller bearing or a roller, and the outer bearing ring (21) or the roller has a peripheral grooved profiled section (22) which is matched to the external contour of the profiled supporting section (23) such that the peripheral grooved profiled section (22) partially encloses the profiled supporting section (23) with form fit.

5. A transfer unit according to one of Claims 1 to 4, characterized in that two guide rollers (12, 13) are arranged one behind the other on the shaft (5) and two profiled guide sections (17) associated therewith are arranged in the same roller track (10), the counter-bearing (15) preferably being arranged centrally between the two guide rollers (12, 13).

6. A transfer unit according to one of Claims 1 to 5, characterized in that the guide rollers (12, 13) comprise an inner ring (18) and an outer ring (19) which are connected by way of a radially elastic intermediate piece (20).

7. A transfer unit according to one of Claims 1 to 6, characterized in that the peripheral grooved profiled section (16) of the guide rollers (12, 13) and the grooved profiled section (22) of the counter-bearing (15) are constructed as shaped profiled sections, in particular as V-shaped profiled sections.

8. A transfer unit according to one of Claims 1 to 7, characterized in that at least one of the guide rollers (12, 13) is connected with form fit, in particular by way of a wedge connection, to the shaft (5).

9. A transfer unit according to one of Claims 1 to 7, characterized in that there is secured to the shaft (5) a gear pinion (26) which meshes with a toothed rack (27) running in the rail module (1) in the longitudinal direction, and the guide rollers (12, 13) are mounted to be freely rotatable on the shaft (5) or a friction drive is provided.

10. A transfer unit according to one of Claims 1 to 9, characterized in that two shafts (5, 5') are provided one behind the other and are mounted in guide rollers (12, 13) and in a counter-bearing (15), the shafts (5, 5') being guided in bearing elements of the carrier plate (3) and the shaft (5') not being driven.

11. A transfer unit according to one of Claims 1 to 10, characterized in that current conductor tracks (29, 30) run in the longitudinal direction of the rail below at least one roller track (10, 11) of the rail module (1).

12. A transfer unit according to one of Claims 1 to 11, characterized in that the drive unit (4) is connected to the workpiece carrier and drives the shaft (5).

13. A transfer unit according to Claim 12, characterized in that the shaft (5) has, on the side opposite the drive motor (4), a shaft extension piece (31) on the end of which there is freely mounted a conductor track circuit board (32) to which current collectors (33, 34) are secured, these current collectors (33, 34) being electrically connected by way of sliding contacts (35) to the conductor tracks (29, 30) in the rail module (1).

14. A transfer unit according to one of Claims 11 to 13, characterized in that there are secured, perpendicularly to the board (32), to a board lengthening piece (36) which lies between the roller tracks (10, 11) of the rail module (1) pin-shaped current collectors (37) which are in electrical contact by way of end sliding contacts (38) with conductor tracks (39) arranged in the carrier plate (3).

15. A transfer unit according to one of Claims 1 to 14, characterized in that the carrier plate (3) is mounted with the bearing elements (42, 43) of the shafts (5, 5') pivotally movable about an axis Y-Y perpendicular to the axis X-X of the shafts (5, 5').

16. A transfer unit according to one of Claims 1 to 15, characterized in that the bearing elements (42, 43) are connected pivotally movably to one another, also by way of a link (44) whereof the pivot axis Z runs parallel to the pivot axis Y-Y.

17. A transfer unit according to one of Claims 1 to 16, characterized in that the drive motor (4) is arranged horizontally, that is to say parallel to the carrier plate (3) and below the latter, and is preferably connected by way of a toothed belt drive to a drive shaft (46) running parallel to the drive motor (4) and arranged opposite the latter, this drive shaft (46) also being mounted rotatably in the bearing element (42) and meshing by means of a drive pinion (47) constructed thereon with a gear wheel (48) secured to the shaft (5).

18. A transfer unit according to one of Claims 1 to 17, characterized in that the pivotally movable mounting of the carrier plate (3) on the bearing elements (42, 43) is achieved by two mutually opposing bearing pins (49, 50) which are secured to the carrier plate (3) and are guided in bearing bushes (51) of the bearing elements (42, 43).

19. A transfer unit according to one of Claims 1 to 18, characterized in that the non-driven shaft (5') is connected by way of a screw connection (52) to the bearing element (43).

20. A transfer unit according to one of Claims 1 to 19, characterized in that current collectors (53) are arranged, above one another, on the free end of the shaft (5') in the plane of the conductor tracks, preferably the number of current collectors (53) being dependent on the number of conductor tracks lying above one another and to be scanned, and the current collectors (53) being mounted on the shaft (5') rotatably about the axis X-X thereof and each having a contact segment (54) whereof the outer contact face (55) is in the shape of a circle arc and lies on a circle whereof the centre point lies along the axis X-X and whereof the diameter corresponds to the spacing between the opposing conductor tracks (29 and 30).

21. A transfer unit according to one of Claims 1 to 20, characterized in that the contact segments (54) are each secured to an arm (55) mounted on the shaft (5) and are in particular arranged with their arms (55) above one another and are each electrically separated from one another, the arms (55) running in the intermediate space between the current conductor tracks and in the direction of the shaft (5).

22. A transfer unit according to one of Claims 1 to 21, characterized in that the arms (55) have the pin-shaped current collectors (37) perpendicular to the carrier plate (3) and have the sliding contacts which are in resilient contact with the current conductor tracks (39) on a circuit board (57) on the underside of the bearing element (43).

23. A transfer unit according to one of Claims 1 to 22, characterized in that the arms (55) are shaped such that the current collectors (37) all lie one behind the other on a straight line through the axis of rotation X-X.

24. A transfer unit according to one of Claims 1 to 23, characterized in that the rail module (1) comprises an aluminium or synthetic profiled section.

25. A transfer unit according to one of Claims 1 to 24, characterized in that the drive motor (4) is connected to the shaft (5) by way of an intermediate gear mechanism (7).

26. A transfer unit according to one of Claims 1 to 25, characterized in that the drive motor (4) is a regulable d.c. motor.

## Revendications

1. Unité de transfert pour réaliser des systèmes de transfert, comportant un module à glissière (1) et un support mobile (2) de pièces à usiner, le support (2) présentant au moins une poulie de guidage (12, 13) guidée dans le module à glissière (1) et étant entraîné par une unité d'entraînement (4), le module à glissière (1) comprenant deux pistes de poulie (10, 11) parallèles dans la direction de transport,
caractérisée en ce que la poulie, respectivement chaque poulie de guidage (12, 13) est agencée sur un arbre (5) du support de pièces (2) s'étendant entre les pistes de poulie (10, 11) dont l'axe de rotation X-X s'étend dans un plan parallèle aux pistes de poulie (10, 11), l'axe de rotation de la (des) poulie(s) coïncidant avec l'axe de rotation X-X de l'arbre (5), la surface de roulement de chaque poulie de guidage (12, 13) suivant un profil de guidage (17) agencé dans une piste de poulie, un profil de support (23) étant agencé dans la piste de poulie (11) en regard du profil de guidage (17), l'arbre (5) s'appuyant sur ce profil (23) au moyen d'une butée (15) pouvant tourner librement.

2. Unité de transfert selon la revendication 1,
caractérisée en ce que le profil de guidage (17) et le profil de support (23) sont formés respectivement par un fil de section circulaire ou un profil de prisme, disposés de préférence sous pression dans les pistes de poulies (10, 11) et dont un segment fait saillie des pistes de poulie (10, 11).

3. Unité de transfert selon la revendication 1 ou 2,
caractérisée en ce que les poulies de guidage (12, 13) présentent sur leur périphérie un profil rainuré (16) adapté au contour extérieur du profil de guidage (17) de manière à ce que le profile rainuré (16) entoure partiellement sans jeu le profil de guidage (17) et soit de préférence appliqué par force contre celui-ci.

4. Unité de transfert selon l'une des revendications 1 à 3,
caractérisée en ce que la butée (15) est formée par un palier à roulement ou une poulie, et que la bague de montage extérieure (21) ou la poulie comporte un profil rainuré (22) adapté au contour extérieur du profil de support (23) de manière à ce que le profil périphérique rainuré (22) entoure partiellement sans jeu le profil de support (23).

5. Unité de transfert selon l'une des revendications 1 à 4,
caractérisée en ce que deux poulies de guidage (12, 13) sont disposées successivement sur l'arbre (5), et que deux profils de guidage (17) associés à celles-ci sont disposés dans la même piste de poulie (10), la butée (15) étant de préférence agencée centralement entre les deux poulies de guidage (12, 13).

6. Unité de transfert selon l'une des revendications 1 à 5,
caractérisée en ce que les poulies de guidage (12, 13) comportent une bague intérieure (18) et une bague extérieure (19), reliées par un élément intermédiaire (20) radialement élastique.

7. Unité de transfert selon l'une des revendications 1 à 6,
caractérisée en ce que le profil périphérique rainuré (16) des poulies de guidage (12, 13) et le profil rainuré (22) de la butée (15) ont la forme de profils moulés, en particulier de profils de prismes.

8. Unité de transfert selon l'une des revendications 1 à 7,
caractérisée en ce qu'au moins l'une des poulies de guidage (12, 13) est reliée de par sa forme à l'arbre (5), en particulier par clavetage.

9. Unité de transfert selon l'une des revendications 1 à 7,
caractérisée en ce qu'un pignon (26) est fixé sur l'arbre (5), ce pignon engrenant une crémaillère (27) s'étendant dans la direction longitudinale dans le module à glissière (1), et que les poulies de guidage (12, 13) sont montées pour tourner librement sur l'arbre (5), ou bien qu'un entraînement par frottement est prévu.

10. Unité de transfert selon l'une des revendications 1 à 9,
caractérisée en ce que deux arbres (5, 5') successifs sont prévus, montés dans des poulies de guidage (12, 13) et dans une butée (15), les arbres (5, 5') étant guidés dans des corps de montage de la plaque de support (3), et l'arbre (5') n'étant pas entraîné.

11. Unité de transfert selon l'une des revendications 1 à 10,
caractérisée en ce qu'en dessous de l'une au moins des pistes de poulie (10, 11) du module à glissière (1), des conduites de courant (29, 30) s'étendent dans la direction longitudinale des glissières.

12. Unité de transfert selon l'une des revendications 1 à 11,
caractérisée en ce que l'unité d'entraînement (4) est reliée au support de pièces et entraîne l'arbre (5).

13. Unité de transfert selon la revendication 12,
caractérisée en ce que l'arbre (5) comprend sur le côté en regard du moteur d'entraînement (4) un appendice d'arbre (31) sur l'extrémité duquel est montée librement une plaque à pistes conductrices (32), sur laquelle sont fixés des récepteurs de courant (33, 34) qui sont en liaison de conduction électrique avec les pistes conductrices (29, 30) du module à glissière (1), grâce à des contacts de frottement (35).

14. Unité de transfert selon l'une des revendications 11 à 13,
caractérisée en ce que des récepteurs de courant (37) en forme de tiges sont fixés verticalement par rapport à la plaque (32), sur un prolongement (36) de celle-ci disposé entre les pistes de poulie (10, 11) du module à glissière (1), ces récepteurs étant en contact de conduction électrique avec des pistes conductrices (39) disposées dans la plaque de support (3), grâce à des contacts de frottement terminaux (38).

15. Unité de transfert selon l'une des revendications 1 à 14,
caractérisée en ce que la plaque de support (3) est disposée, avec les corps de palier (42, 43) des arbres (5, 5'), pour pouvoir pivoter autour d'un axe Y-Y perpendiculaire à l'axe X-X des arbres (5, 5').

16. Unité de transfert selon l'une des revendications 1 à 15,
caractérisée en ce que les corps de palier (42, 43) sont également reliés entre eux de manière pivotante, par une articulation (44) dont l'axe de pivotement Z est parallèle à l'axe de pivotement Y-Y.

17. Unité de transfert selon l'une des revendications 1 à 16,
caractérisée en ce que le moteur d'entraînement (4) est monté couché, c'est-à-dire parallèlement à la plaque de support (3), en dessous de celle-ci, et est relié de préférence par une courroie dentée à un arbre d'entraînement (46) s'étendant parallèlement au moteur d'entraînement (4) et disposé en regard de celui-ci, cet arbre (46) étant également monté rotatif dans le corps (42), un pignon d'entraînement (47) prévu sur cet arbre engrenant une roue dentée (48) fixée sur l'arbre (5).

18. Unité de transfert selon l'une des revendications 1 à 17,
caractérisée en ce que le montage pivotant de la plaque de support (3) dans les corps (42, 43) est obtenu par deux boulons (49, 50) respectivement en regard, fixés sur la plaque de support (3) et guidés dans des alvéoles (51) des corps (42, 43).

19. Unité de transfert selon l'une des revendications 1 à 18,
caractérisée en ce que l'arbre (5') qui n'est pas entraîné, est relié au corps (43) par une liaison à vis (52).

20. Unité de transfert selon l'une des revendications 1 à 19,
caractérisée en ce que, sur l'extrémité libre de l'arbre (5'), dans le plan des pistes de courant, des récepteurs de courant (53) sont disposés les uns au-dessus des autres, le nombre des récepteurs de courant (53) étant de préférence fonction des pistes de courant superposées à balayer, les récepteurs de courant (53) étant montés sur l'arbre (5) de manière à pouvoir tourner autour de l'axe X-X de celui-ci, et présentant un segment de contact (54) dont la face de contact extérieure (55) a la forme d'un arc de cercle et est située sur un cercle dont le centre est situé dans l'axe X-X, et dont le dimaètre correspond à la distance entre les pistes de courant en regard (29, respectivement 30).

21. Unité de transfert selon l'une des revendications 1 à 20,
caractérisée en ce que les segments de contact (54) sont respectivement fixés sur un bras (55) monté sur l'arbre (5), que ces bras (55) sont superposés et respectivement séparés électriquement, les bras (55) s'étendant dans l'intervalle entre les pistes de conduction du courant, dans la direction de l'arbre (5).

22. Unité de transfert selon l'une des revendications 1 à 21,
caractérisée en ce que les bras (55) présentent les récepteurs de courant (37) en forme de tiges, disposés perpendiculairement à la plaque de support (3), et comportent les contacts par frottement qui sont en contact élastique avec les pistes conductrices de courant (39) prévues sur une plaque (57) sur la face inférieure du corps (43).

23. Unité de transfert selon l'une des revendications 1 à 22,
caractérisée en ce que les bras (55) ont une forme telle que les récepteurs de courant (37) sont tous disposés successivement sur une droite passant par l'axe de rotation X-X.

24. Unité de transfert selon l'une des revendications 1 à 23,
caractérisée en ce que le module à glissière (1) consiste en un profilé en aluminium ou en une matière synthétique.

25. Unité de transfert selon l'une des revenciations 1 à 24,
caractérisée en ce que chaque moteur d'entraînement (4) est relié à l'arbre (5) par un dispositif d'entraînement intermédiaire (7).

26. Unité de transfert selon l'une des revendications 1 à 25,
caractérisée en ce que le moteur d'entraînement (4) est un moteur à courant continu réglable.
